# EUROPÄISCHE PATENTSCHRIFT

(11) **EP 0 733 175 B1**
(45) Veröffentlichungstag und Bekanntmachung des Hinweises auf die Patenterteilung: **02.06.1999**
(21) Anmeldenummer: 95903230.1
(22) Anmeldetag: 06.12.1994
(51) Int. Cl.: F16H 9/26, F16H 19/06

(54) **ZAHNRIEMENGETRIEBE**
SYNCHRONOUS BELT DRIVE
TRANSMISSION A COURROIE DENTEE

(30) Priorität: 07.12.1993 DE 4341572
(43) Veröffentlichungstag der Anmeldung: 25.09.1996
(73) Patentinhaber: Technische Universität Dresden, 01062 Dresden (DE)
(72) Erfinder: NAGEL, Thomas, D-01069 Dresden (DE); RICHARD, Ulf, D-15234 Frankfurt (DE)
(86) Internationale Anmeldenummer: DE9401445
(87) Internationale Veröffentlichungsnummer: WO9516152

(56) Entgegenhaltungen:
- EP-A- 0 611 255
- DE-A- 2 357 928
- DE-A- 2 937 827
- US-A- 2 309 578
- ANTRIEBSTECHNIK, Bd.32, Nr.2, Februar 1993 Seiten 33 - 36, XP000339270 R. PERNEDER 'Verdrehsteife Roboterantriebe dank Polyurethan-Synchronriemen'

## Beschreibung

Die Erfindung betrifft ein hochübersetzendes Zahnriemengetriebe zur Übertragung einer rotatorischen in eine translatorische oder rotatorische Bewegung.

Hochübersetzende Zahnriemengetriebe für Lineareinheiten sind bekannt. Mit dem zwischen Antriebs- und Umlenkrad bewegbaren Schlitten sind wenigstens zwei drehfest miteinander verkoppelte Abtriebsräder, an die der Zahnriemen mit Andruckrollen gedrückt wird, verbunden. Die Zähnezahldifferenzen der drehfest miteinander verkoppelten Räder führen zur Schlittenbewegung.

Bei einer Ausführung der Fa. Mulco wird das Abtriebsrad gleichzeitig von Ober- und Untertrum gedreht. Mit dem Abtriebsrad ist ein zweites, kleineres Zahnrad verbunden. Ein Trum des Zahnriemens greift in dieses Zahnrad mit ein.

Bei einer Lösung der Fa. CYBERTRON werden zwei gleich große Abtriebsräder, die gleichzeitig mit je einem Trum im Eingriff stehen, verwendet. An beiden ist je ein zweites Zahnrad befestigt. Diese haben eine Zähnezahldifferenz und sind über einen zweiten Zahnriemen drehfest miteinander verbunden.

Eine ähnliche Lösung enthält die JP-PS 61-149665. Ober- und Untertrum werden mit ihren verzahnten Außenseiten an je ein Abtriebsrad gedrückt. Beide Abtriebsräder sind untereinander mit einem Riementrieb drehfest miteinander verkoppelt. Die Räder dieses Riementriebs (die mit den Abtriebsrädern jeweils fest verbunden sind) haben einen unterschiedlichen Durchmesser.

Durch die Zähnezahldifferenz der Koppel räder entsteht eine Linearbewegung, d. h., die Abtriebsräder drehen sich nicht nur, sondern bewegen sich parallel zu Ober- und Untertrum. Die größte Übersetzung und damit die minimalste Lineargeschwindigkeit ergibt sich bei der geringst möglichen Zähnezahldifferenz.

Aufgabe der Erfindung ist es, ein weiteres hochübersetzendes Zahnriemengetriebe anzugeben.

Erfindungsgemäß wird die Aufgabe durch die Merkmale der Ansprüche 1 und 2 gelöst.

Das Getriebe erhält seine Übersetzung dadurch, daß die Produkte aus den Zähnezahlen der drehfest miteinander verkoppelten Räder und den unterschiedlichen Teilungen der jeweils mit ihnen im Eingriff stehenden Zahnreihe sich wenigstens geringfügig voneinander unterscheiden. Je geringer der Produktunterschied ist, umso höher ist die Übersetzung. Dieser Produktunterschied kann vorzugsweise dadurch realisiert werden, daß bei paarweise gleichen Rädern und gleich langen Zahnreihen sich die Zähnezahl der Zahnreihen um wenigstens einen Zahn unterscheidet. Im Gegensatz zu den hochübersetzenden Getrieben mit kleinem Zähnezahlunterschied der Räder, wie z. B. beim Harmonic-Drive, wird die Übersetzung nicht nur durch den Zähnezahlunterschied bestimmt, sondern auch ganz wesentlich dadurch, auf welcher Riemenlänge dieser Zähnezahlunterschied realisiert wird. Je größer der Zahnriemen ist, umso kleiner ist bei gleicher Zähnezahldifferenz der Teilungsunterschied. Letztlich sind sehr feine Abstufungen und damit hohe Übersetzungen realisierbar, und zwar auch dann, wenn die Zahnmodule festigkeitsbedingt groß sind.

Mit doppelt verzahnten Zahnriemen und gegenläufiger Umschlingung des inneren Zahnradpaares können auch hohe Momente ohne wesentliche konstruktive Einschränkungen übertragen werden.

Das Getriebe ist sowohl für Linearantriebe als auch für die Übertragung einer rotatorischen in eine rotatorische Bewegung einsetzbar. Im zweiten Fall sind Ausführungen realisierbar, bei denen die Übersetzung des Getriebes bei Beibehaltung einer hohen Gesamtübersetzung feinstufig einstellbar ist.

Die Erfindung wird nachfolgend an mehreren Ausführungsbeispielen näher dargestellt. In den Zeichnungen zeigen
- Fig. 1: eine erfindungsgemäße Ausführung mit zwei parallelen Zahnriemen für eine Linearantriebseinheit,
- Fig. 2: die Draufsicht auf Fig. 1,
- Fig. 3: eine erste erfindungsgemäße Ausführung mit zwei parallelen Zahnriemen für ein rotatorisches Getriebe,
- Fig. 4: die Draufsicht auf Fig. 3,
- Fig. 5: eine erfindungsgemäße Ausführung mit einem Zahnriemen für eine Linearantriebseinheit,
- Fig. 6: eine erfindungsgemäße Ausführung mit einem Zahnriemen für eine Rotationseinheit mit Mitteln zur Änderung der Übersetzung.

Die Erfindung wird zunächst an einem Getriebe für einen Linearantrieb gezeigt.

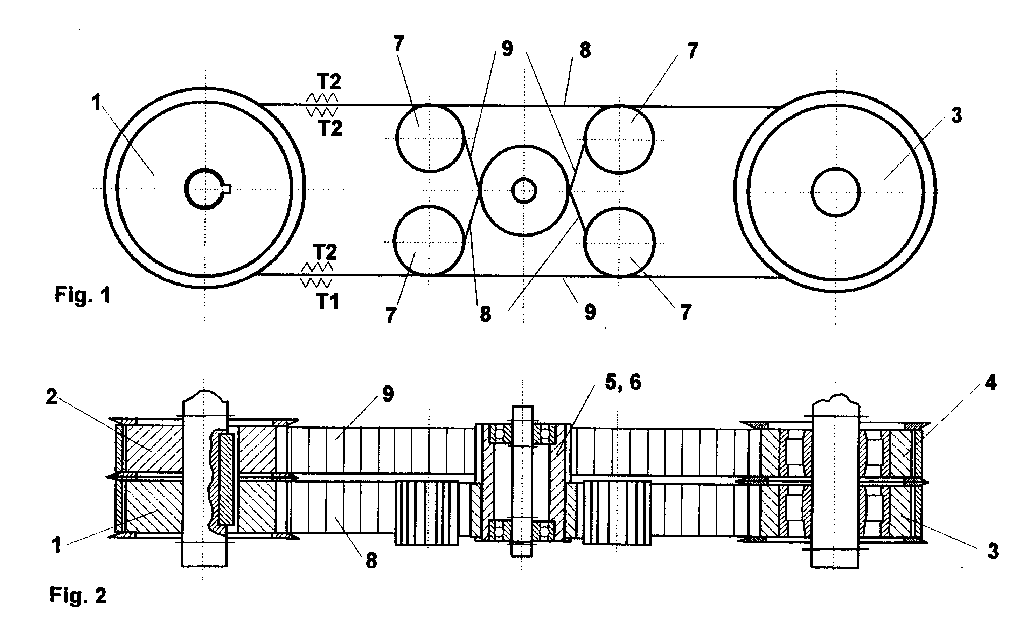

Zwei doppeltverzahnte Zahnriemen 8 und 9 umschlingen ihre jeweiligen Antriebsräder 1 bzw. 2 und die Umlenkräder 3 bzw. 4. Zwischen den Antriebs- und Umlenkrädern befindet sich ein die Zahnriemen umgreifender (nicht dargestellter) Schlitten. In dem Schlitten sind die Achsen von Spannrollen 7 und von Rädern 5 und 6 befestigt. Der untere Trum des Zahnriemens 8 läuft (in der Betrachtung der Figuren 1 und 2 von links nach rechts) von unten über die Spannrolle 7 nach oben, umschlingt von oben das Rad 5 und läuft dann wieder von oben nach unten um die rechte untere Spannrolle 7 zum Umlenkrad 3. Der obere Trum des Zahnriemens 8 läuft ohne Umschlingung einer der Spannrollen 7 oder des Rades 5 zum Antriebsrad 1 zurück. Umgekehrt wird der untere Trum des Zahnriemens 9 vom Antriebsrad 2 direkt zum Umlenkrad 4 geführt, während der obere Trum vom Umlenkrad 4 über die Rollen 7 und Rad 6 zum Antriebsrad 2 zurückläuft.

Die Räder 1 und 2 sowie 5 und 6 sind paarweise drehfest miteinander verbunden, d. h., 1 und 2 bzw. 5 und 6 haben immer dieselbe Drehzahl. Die Teilung der Zahnriemen ist auf den Innenseiten gleich, d. h., bei beiden gleich T2, und auf den Außenseiten unterschiedlich, T1 und T2. Beispielsweise sei die Teilung des Zahnriemens 8 auf seiner Außenseite größer, als die des Zahnriemens 9 auf dessen Außenseite. Die Zahnriemen bewegen sich mit gleicher Umfangsgeschwindigkeit um die Antriebs- und Umlenkräder. Durch den Teilungsunterschied auf den Außenseiten der Zahnriemen 8 und 9 würden zwei geteilte, unabhängig voneinander drehbare Räder 5 und 6 mit unterschiedlichen Drehzahlen laufen und zwar würde das unter dem Zahnriemen 8 schneller als das unter dem anderen Zahnriemen 9 drehen. Da die Räder 5 und 6 aber ein ungeteiltes, gleichverzahntes Rad bilden, bewegt sich die gemeinsame Achse der Räder 5 und 6 je nach Antriebsrichtung auf die Antriebsräder 1 und 2 zu oder von diesen weg und mit ihr der Schlitten. Die Geschwindigkeit entspricht dem geringen theoretischen Drehzahlunterschied, den geteilte Räder 5 und 6 hätten, multipliziert mit deren Radius.

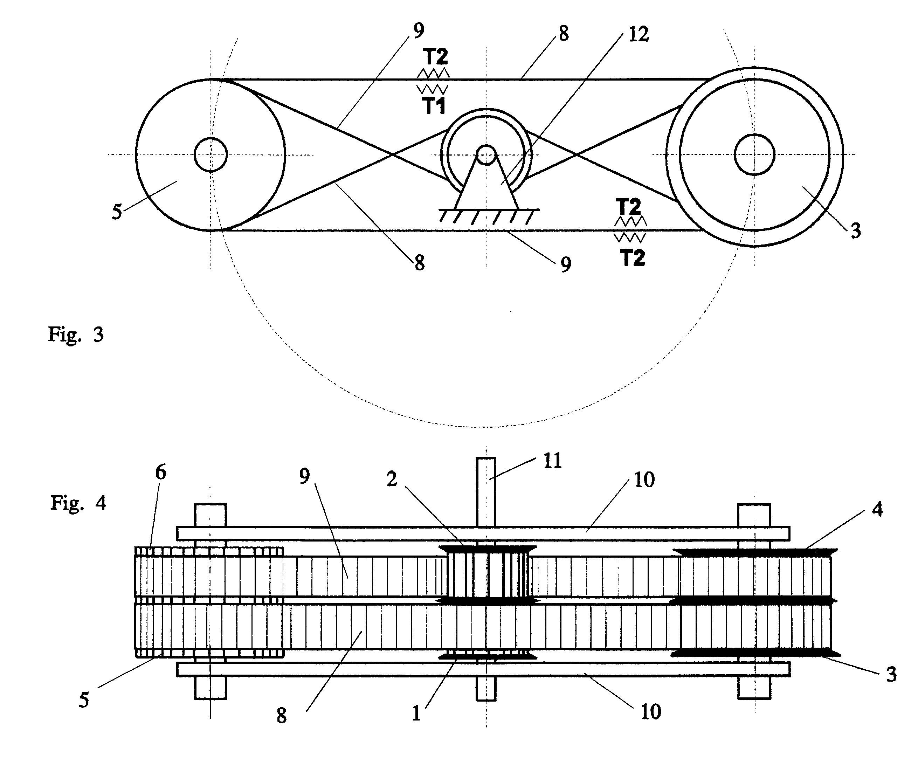

In den Figuren 3 und 4 wird ein erfindungsgemäßes Getriebe für die Übertragung einer rotatorischen in eine rotatorische Bewegung gezeigt.

Zur Variation wurde festgelegt, daß diesmal die Innenseiten der Zahnriemen 8 und 9 unterschiedlich geteilt sind. Alle Räder sind drehbar auf einem Steg 10 angeordnet, der sich um eine Achse im Gestellpunkt 12 dreht. Um diese Achse dreht sich auch die mit den Rädern 1 und 2 verbundene Antriebswelle 11. Die mit der unterschiedlichen Teilung im Eingriff stehenden Räder 5 und 6 fungieren als Umlenkräder. Der Teilungsunterschied T1 minus T2 führt zu einer langsamen Drehbewegung der Stege 10.

Bei beiden Ausführungen wurden doppelt verzahnte Zahnriemen verwendet, um hohe Momente drehwinkelgenau zu übertragen.

Für eine dritte Ausführung wird angenommen, daß die Stege 10 Teile eines festen Rahmens sind, in denen die Räder 1 bis 6 lagern.

In einer ersten Variante dieser dritten Ausführung seien die Räder 1 und 2 miteinander verbunden und die Räder 5 und 6 unabhängig voneinander drehbar. Ein Antrieb der Räder 1/2 führt bei den Rädern 5 und 6 zu einer gemeinsamen Drehzahl, der eine geringe Differenzdrehzahl beider Räder übergeordnet ist. An 5 und 6 könnte ein mehrgliedriges Getriebe angeschlossen werden.

Dasselbe Ergebnis kann bei einer zweiten Variante dadurch erzielt werden, wenn die Räder 5 und 6 miteinander verbunden und 1 und 2 gegeneinander verdrehbar ausgeführt sind. Eine mit dem Rad 1 eingeleitete Drehbewegung hätte am Rad 2 eine geringfügig veränderte Drehzahl zur Folge. Mit durch das Rad 2 geführter Welle des Rades 1 und Hohlwelle von Rad 2 können beide Drehzahlen auf der Seite von Rad 2 abgenommen werden. Zwischen der Eingangsdrehzahl und der Differenzdrehzahl der Räder 1 und 2 kann ein hohes Übersetzungsverhältnis hergestellt werden.

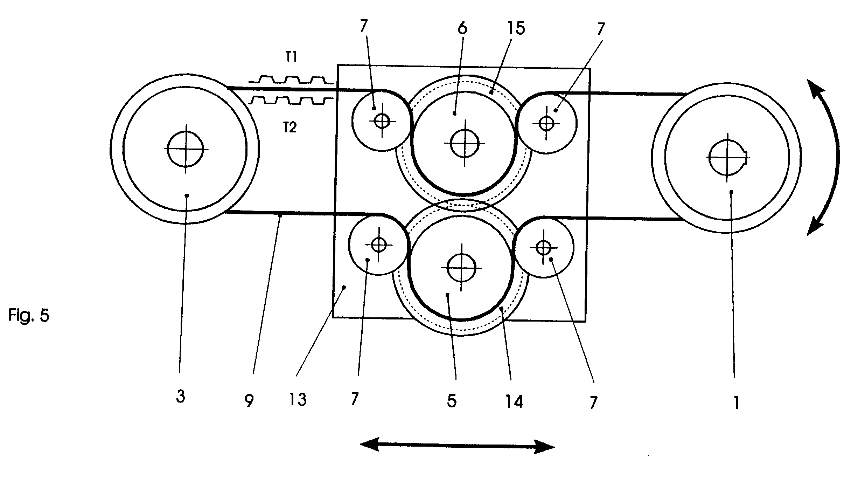

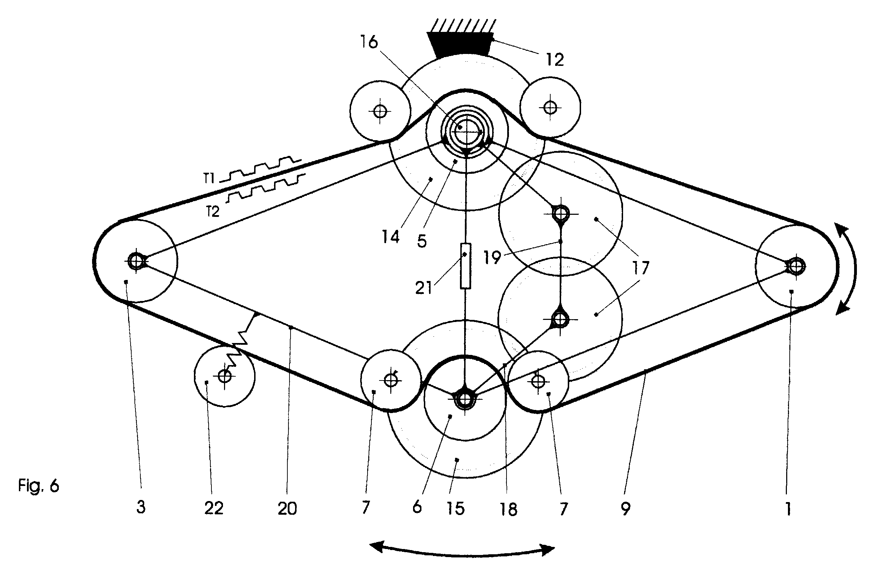

In den Figuren 5 und 6 werden Ausführungen mit nur jeweils einem Zahnriemen 9 gezeigt. Er ist doppelt verzahnt mit den unterschiedlichen Teilungen T1 und T2.

Fig. 5 zeigt einen Linearantrieb. In einem Schlitten 13 sind zwei gleiche Antriebsräder 5 und 6 gelagert und mit zwei ebenfalls gleichen zahnrädern 14 und 15 drehfest miteinander verkoppelt. Ein doppeltverzahnter Zahnriemen 9 umschlingt die Antriebsräder 5 und 6 und zwei Umlenkräder 1 und 3. Mittels Andruckrollen 7 wird der Zahnriemen 9 mit seiner Innenseite an das Abtriebsrad 5 und mit seiner Außenseite an das Abtriebsrad 6 gedrückt. Das Umlenkrad 1 wird angetrieben. Da die Räder 5 und 6 drehfest miteinander verkoppelt sind, bewegt sich der Schlitten 13 je nach Antriebsrichtung auf das Antriebsrad 1 zu oder von diesem weg. Die Geschwindigkeit entspricht dem geringen theoretischen Drehzahlunterschied, den nicht verkoppelte Räder 5 und 6 hätten, multipliziert mit deren Radius.

Aus der in Fig. 5 gezeigten Variante könnte mit geringen Änderungen ein erfindungsgemäßes Getriebe für die Übertragung einer rotatorischen in eine rotatorische Bewegung gebildet werden. Anstelle des Schlittens 13 müßte ein Steg vorgesehen werden, in dem auch die Räder 1 und 3 gelagert sind. Eines der Abtriebsräder, z. B. das Rad 6 müßte als Antriebsrad ausgebildet werden. Der Steg würde sich dann um dessen Achse drehen.

In Fig. 6 wird eine modifizierte Ausführung einer solchen Variante gezeigt. Die Räder sind nicht in einem Steg, sondern in Schwingen 20 gelagert. Dadurch wird der Abstand zwischen den Rädern 5 und 6 veränderbar. Ein größerer Abstand dieser Räder bedeutet bei sonst gleichen Bedingungen, daß sich die Abtriebsdrehzahl verringert.

Antriebsrad ist Rad 6. Seine Achse 16 ist in einem Gestellpunkt 12 gelagert. Die Schwingen 20 bilden ein rhomboidförmiges Gelenkviereck. Zwischen den Zahnrädern 14 und 15, die in der ersten Variante die beiden Räder 5 und 6 direkt drehfest miteinander verkoppelten, ist mittels Schwingen 18 und einer Koppel 19 ein Zahnradpaar 17 gekoppelt. Sie folgen damit selbständig den Abstandsänderungen.

Zwischen zwei benachbarten Schwingen 20 (in der Zeichnung sind es die beiden unteren) ist eine Schloßschraube 21 angebracht. Mit ihr wird der Winkel zwischen diesen beiden Schwingen und damit der Abstand zwischen den Rädern 5 und 6 verstellt.

Desweiteren ist eine mit einer der Schwingen 20 verbundene Spannrolle 22 vorgesehen. Dadurch wird bei einer Abstandsänderung der Räder 5 und 6 ein etwa gleichbleibender Andruck der Rollen 7 gegen den Zahnriemen 9 gesichert.

Bei Antrieb des Zahnriemens 9 drehen sich die miteinander verbunden Schwingen 20 um die Achse 16. Diese Drehbewegung kann in einfacher Weise abgenommen werden. Zum Beispiel könnte ein (nicht dargestelltes) um die Achse 16 drehende Abtriebsrad mit einer der beiden an dieser Achse angekoppelten Schwingen 20 verbunden werden.

### Bezugszeichen

- 1: Antriebsrad
- 2: Antriebsrad
- 3: Umlenkrad
- 4: Umlenkrad
- 5: Rad, mit 6 drehfest verkoppelt
- 6: Rad, mit 5 drehfest verkoppelt
- 7: 7 Andruckrolle
- 8: Zahnriemen
- 9: Zahnriemen
- 10: Steg
- 11: Welle
- 12: Gestellpunkt
- 13: Schlitten
- 14: Koppelzahnrad
- 15: Koppelzahnrad
- 16: Drehachse
- 17: Koppelzahnrad
- 18: Schwinge
- 19: Koppel
- 20: Schwinge
- 21: Schloßschraube
- 22: Andruckrolle

## Patentansprüche

1. Zahnriemengetriebe, bestehend aus zwei parallel angeordneten Getriebestufen mit zwei doppelt verzahnten Zahnriemen (8 bzw. 9), die je ein Antriebsrad (1 bzw. 2), ein Abtriebsrad (5 bzw. 6) und wenigstens ein Umlenkrad (3 bzw. 4) umschlingen, wobei zwischen beiden Zahnriemen zwei drehfest gekoppelte Räderpaare (1,2;5,6) zur Kopplung der Drehzahlen beider Getriebestufen vorgesehen sind, und bei dem der eine Zahnriemen (8) zwei zahnriemengebundene Zahnreihen mit unterschiedlichen Teilungen (T1 und T2) besitzt, die mit je einem der Räder der drehfesten Räderpaare (Tl mit 5 bzw. T2 mit 1) im Eingriff stehen, der andere Zahnriemen (9) gleiche Teilungen (T2 und T2) besitzt, und sich die Produkte aus den Zähnezahlen der Räder (5 bzw. 6) mit den Teilungen der Zahnreihen (T1 und T2) wenigstens geringfügig voneinander unterscheiden.

2. Zahnriemengetriebe mit einem Antriebsrad (1), einem Abtriebsrad (5) und wenigstens einem Umlenkrad (3), die von einem Zahnriemen (9) umschlungen sind, und einer weiteren Getriebestufe, wobei zwischen dem Zahnriemengetriebe und der weiteren Getriebestufe zwei drehfest gekoppelte Räderpaare (5,14;6,15) zur Kopplung der Drehzahlen beider Getriebestufen vorgesehen sind, wobei der Zahnriemen (9) zwei zahnriemengebundene Zahnreihen mit unterschiedlichen Teilungen (T1 und T2) aufweist, die unterschiedlich geteilten Zahnreihen (T1 bzw. T2) mit je einem der Räder (5 bzw. 6) in Eingriff stehen, wobei sich die Produkte aus den Zähnezahlen der Räder (5 bzw. 6) und den Teilungen der zugehörigen Zahnreihen (T1 bzw. T2) wenigstens geringfügig voneinander unterscheiden.

3. Zahnriemengetriebe nach Anspruch 2, bei dem die Räder (5 und 6) in einer Ebene entgegengesetzt drehend über ein ein- oder mehrstufiges Zahnradgetriebe miteinander verkoppelt sind.

4. Zahnriemengetriebe nach Anspruch 1, bei dem die Radpaare (1,2 bzw. 5,6) aus jeweils zwei Rädern mit gleich großer Zähnezahl gebildet werden, die unterschiedlich geteilten Zahnreihen (T1 und T2) gleich lang sind und ihre Zähnezahl sich um wenigstens einen Zahn unterscheidet.

5. Zahnriemengetriebe nach Anspruch 3, bei dem die Räder (5,6 bzw. 14,15) gleiche Zähnezahl besitzen, und die Zähnezahl der Zahnreihen (T1 und T2) sich um wenigstens einen Zahn unterscheiden.

6. Zahnriemengetriebe nach einem der vorangegangenen Ansprüche, bei dem die beiden Räder eines Radpaares drehbar auf einem translatorisch geführten Schlitten (13) befestigt sind.

7. Zahnriemengetriebe nach einem der vorangegangenen Ansprüche, bei dem die Räder drehbar auf einem drehbaren Steg (10) befestigt sind.

8. Zahnriemengetriebe nach Anspruch 2, bei dem der Abstand zwischen den miteinander verkoppelten Rädern (5 und 6) einstellbar ist.

9. Zahnriemengetriebe nach Anspruch 8, bei dem die Räder (1,3,5 und 6) in den Gelenkpunkten von vier rhomboidförmig angeordneten und gelenkig miteinander verbundenen Schwingen (20) gelagert sind.

10. Zahnriemengetriebe nach Anspruch 9, bei dem die beiden Koppelzahnräder (14 und 15) über ein weiteres Zahnradpaar (17) miteinander verkoppelt sind und die Zahnräder (17) mit zwei Schwingen (18) und einer Koppel (19) untereinander gekoppelt und mit den Koppelzahnrädern (14 und 15) im Eingriff stehen.

## Claims

1. A synchronous belt drive, consisting of two stages arranged in parallel with two toothed belts with double toothing (8 and 9) each of them contacting one driving wheel (1 or 2, respectively), one driven wheel (5 or 6, respectively) and at least one return wheel (3 or 4, respectively). Between the two toothed belts two coupled pairs of wheels secured against rotation (1,2;5,6) are provided for coupling the speeds of both stages, and one of the toothed belts (8) has two rows of teeth interconnected by a toothed belt with different pitches (T1 and T2) being engaged each with one of the wheels of the pairs of wheels secured against rotation (T1 with 5 and T2 with 1), the other toothed belt (9) having equal pitches (T1 and T2) and the products of the numbers of teeth of the said wheels (5 and 6) by the pitches of the rows of teeth (T1 and T2) differing at least slightly from each other.

2. A synchronous belt drive with one driving wheel (1), one driven wheel (5) and at least one return wheel (3) which are contacted by a toothed belt (9), and another stage, two coupled pairs of wheels secured against rotation (5,14;6,15) between the synchronous belt drive and the other stage being provided for coupling the speeds of both stages, the toothed belt (9) having two rows of teeth interconnected by a toothed belt with different pitches (T1 and T2), the rows of teeth with different pitches (T1 and T2) engaging each one of the wheels (5 and 6, respectively), the products of the number of teeth of the wheels (5 and 6) by the pitches of the corresponding rows of teeth (T1 and T2) differing at least slightly from each other.

3. A synchronous belt drive as claimed in Claim 2 in which the wheels (5 and 6) are coupled counterrotating in a plane through a one-stage or multi-stage toothed gearing.

4. A synchronous belt drive as claimed in Claim 1 in which the pairs of wheels (1,2 or 5,6) each consist of two wheels with an equal number of teeth, the rows of teeth with different pitches (T1 and T2) are equal in length and their number of teeth differs by at least one tooth.

5. A synchronous belt drive as claimed in Claim 3 in which the wheels (5,6 or 14,15) have the same number of teeth and the number of teeth of the rows of teeth (T1 and T2) differs by at least one tooth.

6. A synchronous belt drive as claimed in any one of the preceding claims in which both wheels of a pair of wheels are rotatably mounted on a translatorily guided slide (13).

7. A synchronous belt drive as claimed in any one of the preceding claims in which the wheels are rotatably mounted on a rotatable bracket (10).

8. A synchronous belt drive as claimed in Claim 2 in which the spacing between the interconnected wheels (5 and 6) is adjustable.

9. A synchronous belt drive as claimed in Claim 8 in which the wheels (1,3,5 and 6) are supported in the pivot points of four rhomboidally arranged and not rigidly connected rockers (20).

10. A synchronous belt drive as claimed in Claim 9 in which the two gears (14 and 15) are coupled with each other through another pair of gears (17) and the gears (17) are interconnected by two rockers (18) and a coupler (19) and are engaged with the gears (14 and 15).

## Revendications

1. Un engrenage à courroie dentée, composé de deux niveaux d'engrenages ordonnés parallèlement avec deux courroies doublement dentées (8 ou 9), qui chacune entourent une roue de commande (1 ou 2), une roue de descente (5 ou 6) ainsi qu'au moins une roue de détournement (3 ou 4), et dans le cas où sont prévus entre les deux courroies dentées deux couples de roues jumelées de façon rigide (1, 2 ; 5, 6) afin de jumeler le nombre de rotations des deux niveaux d'engrenages. L'une des deux courroies dentées (8) possède deux rangées de dents, fixées sur la courroie dentée et garnies de divisions différentes (T1 et T2), qui sont en prise avec chacune des roues des couples de roues rigides (T1 avec 5 ou T2 avec 1), alors que l'autre courroie dentée (9) possède des séparations identiques (T1 et T2) et les produits issus des nombres de rotations des roues (5 ou 6) avec les séparations des rangées de dents (TI et T2) se différencient au minimum les uns des autres de manière minimale.

2. Un engrenage à courroie dentée avec une roue de commande (1), une roue de descente (5) et au minimum une roue de détournement (3), qui sont enserrées par une courroie dentée (9) et un niveau d'engrenage ultérieur, à l'occasion de quoi deux paires de roues jumelées de façon rigide (5, 14 : 6, 15) et placées entre l'engrenage à courroie dentée et les niveaux d'engrenages ultérieurs, sont prévues pour assurer le jumelage du nombre de rotations des deux niveaux d'engrenage. À cet effet la courroie dentée (9) démontre deux rangées de dents, fixées sur la courroie dentée, avec des séparations différentes (T1 et T2). Les rangées de dents séparées différemment (T1 ou T2) sont en prise avec une des roues (5 ou 6), à l'occasion de quoi les produits issus des nombres de dents des roues (5 ou 6) ainsi que des séparations des rangées de dents qui en font partie (T1 ou T2) se différencient les uns des autres au minimum de manière insignifiante.

3. En vertu de la spécification 2, il s'agit d'un engrenage à courroie dentée chez lequel les roues (5 et 6), tournant de façon opposée au dessus d'un engrenage à roue dentée à un ou plusieurs niveaux, sont jumelées sur un niveau.

4. En vertu de la spécification 1, il s'agit d'un engrenage à courroie dentée chez lequel les couples de roues (1, 2 ou 5, 6) sont formés respectivement par deux roues possédant un nombre identique de dents, et les rangées de dents séparées de manière différente (T1 et T2) sont de longueur identique et leur nombre de dents se différencie au minimum d'une dent.

5. En vertu de la spécification 3, il s'agit d'un engrenage à courroie dentée dans lequel les roues (5, 6 ou 14, 15) possèdent un nombre identique de dents et le nombre de dents des rangées de dents (T1 et T2) se différencient au minimum d'une dent.

6. En vertu de l'une des spécifications précédentes, l'engrenage à courroie dentée, dans lequel les deux roues d'un couple de roues sont fixées rotativement sur un chariot guidé translatéralement (13).

7. En vertu de l'une des spécifications précédentes, il s'agit d'un engrenage à courroie dentée, chez lequel les roues sont fixées rotativement sur une entretoise rotative (10).

8. En vertu de la spécification 2, il s'agit d'engrenage à courroie dentée, chez lequel l'espace entre les roues accouplées (5 et 6) est ajustable.

9. En vertu de la spécification 8, il s'agit d'un engrenage à courroie dentée, chez lequel les roues (1, 3, 5 et 6) sont installées dans les joints de quatre coulisses de forme rhomboïde disposées et assemblées entre elles de façon articulée (20).

10. En vertu de la spécification 8, il s'agit d'un engrenage à courroie dentée, chez lequel les deux roues dentées couplées (14 et 15) sont jumelées ensemble au dessus d'un autre couple de roue dentée (17) tandis que les roues dentées (17) sont jumelées entre elles au moyen de deux coulisses (18) et d'une laisse de couplage (19) et sont en prise avec les roues dentées jumelées (14 et 15).
